# EUROPEAN PATENT SPECIFICATION

(11) **EP 2 431 486 B1**
(45) Date of publication and mention of the grant of the patent: **04.07.2018**
(21) Application number: 09844645.3
(22) Date of filing: 22.05.2009
(51) Int. Cl.: C21D 9/56, B01D 46/00, B01D 5/00, C21D 9/573

(54) **CONTINUOUS ANNEALING FURNACE**
KONTINUIERLICH ARBEITENDER GLÜHOFEN
FOUR DE RECUIT CONTINU

(30) Priority: 11.05.2009 JP 2009114595
(43) Date of publication of application: 21.03.2012
(73) Proprietor: Chugai Ro Co., Ltd., Chuo-ku Osaka-shi Osaka 541-0046 (JP)
(72) Inventor: NAKAGAWA Hiroo, Osaka-shi Osaka 541-0046 (JP)
(74) Representative: Glawe, Delfs, Moll
(86) International application number: PCT/JP2009/059396
(87) International publication number: WO 2010/131375

(56) References cited:
- EP-A1- 1 338 659
- WO-A1-2005/038059
- DE-A1- 3 622 145
- JP-A- 10 226 824

## Description

### [Technical Field]

The present invention relates to a continuous annealing furnace which includes a heating zone for heating a subject material and a cooling zone for cooling the heated subject material and anneals the subject material in a bright-annealing ambient gas while continuously transporting the subject material from the heating zone to the cooling zone. Particularly, the invention is characterized as follows. The subject material heated in the heating zone is introduced into the cooling zone so as to be cooled. When the heated ambient gas, introduced from the heating zone into the cooling zone, is cooled, a white powder component contained in the ambient gas is condensed and solidified to form white power. The invention is adapted to remove the white powder adequately, thereby appropriately preventing the white powder from piling on a cooler and the like to lower cooling efficiency or from piling on a surface of the subject material to impair the brilliance thereof.

### [Background Art]

There has been known a practice in which the subject material such as stainless steel strip formed by cold rolling or the like is continuously transported from the heating zone to the cooling zone in the continuous annealing furnace whereby the subject material is heated in the heating zone and thereafter, the subject material thus heated is cooled in the cooling zone.

In continuously annealing the subject material such as the stainless steel strip in the continuous annealing furnace, the following method is commonly practiced to prevent the subject material such as the stainless steel strip from losing the brilliance thereof. The subject material is bright annealed in the bright-annealing ambient gas consisting primarily of hydrogen gas and nitrogen gas by continuously transporting the subject material from the heating zone to the cooling zone.

It is noted here that in the case where the subject material is heated in the above-described ambient gas in the heating zone, the white powder component including a variety of oxides formed by oxidation of boron and the like added to the subject material, and grease and the like adhered to the surface of the subject material is evaporated so that the ambient gas contains the white powder component.

In general, the subject material thus heated is cooled in the cooling zone as follows. The ambient gas heated in the heating zone is introduced into the cooler so that the ambient gas is cooled by the cooler. The ambient gas thus cooled is supplied to the cooling zone so that the heated subject material is cooled in the cooled ambient gas.

However, in the case where the ambient gas heated in the heating zone is introduced into the cooler and cooled in this manner, the following problem is encountered. The white powder component contained in the ambient gas is condensed and solidified upon contact with the cooler so as to form the white powder, which piles on the cooler to lower the cooling efficiency thereof or to the surface of the subject material to impair the brilliance thereof.

Furthermore, the cooler needs cleaning in order to prevent lowering the cooling efficiency thereof as described above.

However, the following problem exists because this continuous annealing furnace uses the bright-annealing ambient gas consisting primarily of hydrogen gas and nitrogen gas, as described above. In the case of cleaning the cooler, it is necessary to replace the ambient gas in the continuous annealing furnace with an inert gas such as nitrogen gas in order to prevent the combustion of the ambient gas leaking out of the furnace. Furthermore, after the cooler is cleaned, the continuous annealing furnace need be re-filled with the bright-annealing ambient gas consisting primarily of hydrogen gas and nitrogen gas. The cleaning of the cooler involves very cumbersome operations and takes a great deal of time. Hence, the stop time of the continuous annealing furnace is also increased so that the continuous annealing furnace is significantly reduced in productivity.

As disclosed in Patent Documents 1 and 2, therefore, a continuous annealing furnace has been proposed in the related art which is arranged such that the ambient gas taken out from the continuous annealing furnace is introduced through a filter which removes the white powder generated in the ambient gas. Subsequently, the resultant ambient gas is returned to the continuous annealing furnace.

In the case where the white powder generated in the ambient gas is removed by means of the filter, the white powder is gradually accumulated on the filter so that the filter is gradually decreased in filtering capability. Therefore, the filter requires replacement or cleaning. This leads to the same problem as in the case of cleaning the cooler.

### [Prior Aft Documents]

### [Patent Documents]

Patent Document 1: JP-A No.H10-72624
Patent Document 2: JP-A No.2003-247787

### [Disclosure of the Invention]

### [Problems to Be Solved by the Invention]

In the continuous annealing furnace including the heating zone for heating the subject material and the cooling zone for cooling the heated subject material, the invention addresses the aforementioned problems encountered in the case where the subject material is annealed in the bright-annealing ambient gas while being continuously transported from the heating zone to the cooling zone.

In cooling the subject material heated in the heating zone by introducing the subject material into the cooling zone, an object of the invention is to adequately remove the white powder formed by condensation and solidification from the white powder component contained in the ambient gas when the heated ambient gas introduced from the heating zone into the cooling zone is cooled, thereby to appropriately prevent the white powder from piling on and the like to lower the cooling efficiency or from piling on the surface of the subj ect material to impair the brilliance thereof.

### [Means for Solving the Problems]

In accordance with the invention for achieving the above object, a continuous annealing furnace which comprises a heating zone for heating a subject material and a cooling zone for cooling the heated subject material and which anneals the subject material in a bright-annealing ambient gas while continuously transporting the subject material from the heating zone to the cooling zone is characterized in that a guiding duct is provided for introducing the ambient gas containing a white powder component from the continuous annealing furnace to a white powder removal portion and that the white powder removal portion includes a cooling roll for inducing the formation of white powder by cooling the ambient gas and removing means for removing the white powder formed on the cooling roll.

In introducing the ambient gas containing the white powder component from the continuous annealing furnace into the white powder removal portion, it is preferred in the above continuous annealing furnace that the ambient gas containing the white powder component is introduced into the white powder removal portion as maintained at a temperature above a solidification point of the white powder component in order to prevent the generation of the white powder before the ambient gas is introduced into the white powder removal portion.

In the case where the ambient gas containing the white powder component is introduced into the white powder removal portion as maintained at the temperature above the solidification point of the white powder component, it is preferred that the guiding duct is provided with a temperature controller for controlling the temperature of the ambient gas introduced into the white powder removal portion, such that the temperature of the ambient gas introduced into the white powder removal portion may be controlled to a suitable level above the solidification point of the white powder component.

In order to adapt the white powder removal portion for adequate removal of the white powder from the ambient gas containing the white powder component, it is preferred that the plural cooling rolls and removing means are provided in the white powder removal portion. It is further preferred that a gap defined between the cooling rolls for passage of the ambient gas is made small and that a coolant is fed from a coolant feeding device into the white powder removal portion.

After the white powder is removed from the cooling rolls by means of the removing means, the removed white powder is discharged from the white powder removal portion to the outside by means of the discharging means while the ambient gas removed of the white powder can be returned to the continuous annealing furnace.

It is preferred to provide a vibratory device for imparting vibrations to the white powder removal portion in order to prevent the white powder, generated in the white powder removal portion, from piling on an interior of the white powder removal portion and remaining therein.

### [Advantageous Effects of the Invention]

According to the continuous annealing furnace of the invention, the ambient gas containing the white powder component is introduced from the continuous annealing furnace into the white powder removal portion via the guiding duct. The ambient gas is cooled by contact with the cooling rolls disposed in the white powder removal portion, thereby allowing the white powder contained in the ambient gas to be formed on the cooling rolls. The white powder thus formed on the cooling rolls is removed by means of the removing means.

Accordingly, the white powder does not adhere to nor accumulate on the cooling rolls in the continuous annealing furnace of the invention. This ensures not only that the ambient gas is stably cooled by the cooling rolls but also that the white powder contained in the ambient gas is removed steadily. The white powder is appropriately prevented from piling on the surface of the subject material and impairing the brilliance thereof.

Further, the white powder formed on the cooling rolls as described above is removed by means of the removing means. Therefore, there is no need for suspending the operation of the continuous annealing furnace in order to clean the cooler or filter, as conventionally practiced in the related art. In addition, the reduction of productivity is also avoided.

Since the white powder removal portion itself has a function to cool the ambient gas, there is no need for providing the cooler separately.

If the plural cooling rolls and removing means are provided in the white powder removal portion and the gap defined between the cooling rolls for passage of the ambient gas is made small, thermal conductivity is improved because of the increase in the area where the ambient gas is in contact with the cooling rolls and the increase in speed at which the ambient gas passes through the gap between the cooling rolls. This ensures not only that the ambient gas containing the white powder component is adequately cooled by the individual cooling rolls but also that the white powder contained in the ambient gas is induced to form adequately on the individual cooling rolls. Hence, the white powder is adequately removed by the removing means.

If the coolant is fed from the coolant feeding device into the white powder removal portion, the ambient gas containing the white powder component can be adequately cooled by the cooling rolls and the coolant, so that the white powder contained in the ambient gas is induced to form adequately on the cooling rolls. The white powder is adequately removed by means of the removing means.

### [Brief Description of the Drawings]

Fig.1 is a schematic diagram illustrating a continuous annealing furnace according to one embodiment of the invention;
Fig.2 is a schematic diagram illustrating a structure of a white powder removal portion in the continuous annealing furnace according to the above embodiment, the white powder removal portion including cooling rolls and removing means for removing white powder from an ambient gas containing a white powder component; and
Fig.3 is a schematic diagram illustrating an exemplary modification of the cooling roll and removing means provided in the white powder removal portion of the continuous annealing furnace according to the above embodiment.

### [Best Modes for Carrying Out the Invention]

A continuous annealing furnace according to an embodiment of the invention will be specifically described as below with reference to the accompanying drawings. It is to be noted that the continuous annealing furnace according to the invention is not limited to the embodiments disclosed hereinbelow but may be embodied in other suitable forms without departing from the spirit or essential characteristics thereof.

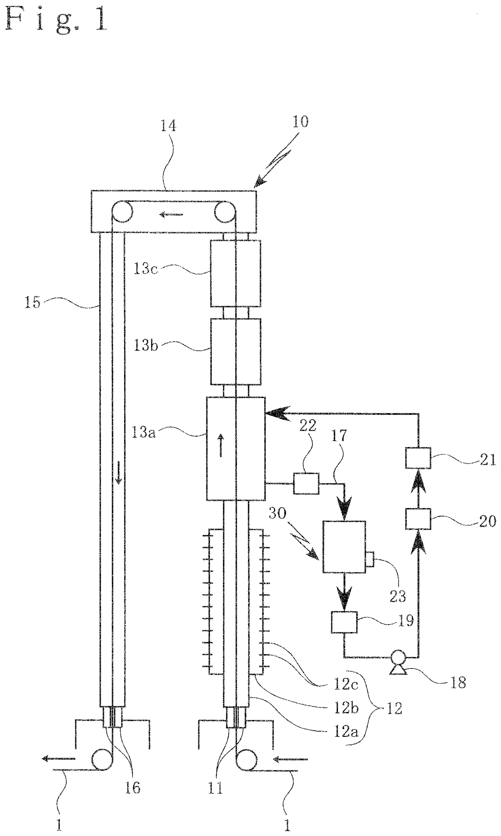

According to the embodiment, as shown in Fig.1, a strip-like subject material 1 such as stainless steel strip formed by cold rolling is introduced into a continuous annealing furnace 10 through an inlet sealing portion 11. The continuous annealing furnace is filled with a bright-annealing ambient gas consisting primarily of hydrogen gas and nitrogen gas.

In this continuous annealing furnace 10, the subject material introduced through the inlet sealing portion 11, as described above, is heated in a heating zone 12. The subject material 1 heated in the heating zone 12 is cooled by sequentially introducing the subject material into first to third cooling zones 13a to 13c. The subject material 1 thus cooled is introduced into a top roll chamber 14 provided with rollers. From the top roll chamber 14, the subject material 1 is introduced into an outlet sealing portion 16 via a chute 15.

For heating the subject material 1 in the heating zone 12, this continuous annealing furnace 10 is arranged such that the heating zone 12 has a double pipe structure wherein the subject material 1 is passed through an internal pipe 12a of the heating zone 12. The subject material 1 passed through the internal pipe 12a is indirectly heated by heating means 12c, such as a burner, mounted to an external pipe 12b.

When the subject material 1 is heated in the heating zone 12 as described above, a white powder component including various oxides formed by oxidation of boron and the like added to the subject material and grease and the like adhered to the surface of the subject material is evaporated so that the ambient gas contains therein the white powder component. The ambient gas so containing the white powder component is introduced into the first cooling zone 13a together with the heated subject material 1.

In the continuous annealing furnace 10 of the embodiment, the above-described first cooling zone 13a is provided with a guiding duct 17 such that the ambient gas introduced into the first cooling zone 13a and containing the white powder component is introduced through the guiding duct 17 into a white powder removal portion 30 by means of a blower 18. Further, the guiding duct 17 is provided with a temperature controller 22 for controlling the temperature of the above ambient gas so as to ensure that the ambient gas is introduced into the white powder removal portion as maintained at a proper temperature that is above a solidification point of the white powder component. In a case where the solidification point of the white powder component is on the order of 580°C, for example, the temperature of the ambient gas introduced into the white powder removal portion 30 is so controlled by the temperature controller 22 as to range between 600°C and 650°C.

The ambient gas thus introduced into the white powder removal portion 30 is cooled for condensing and solidifying the white powder component contained in the ambient gas. The white powder thus formed is removed in the white powder removal portion 30. In this embodiment, the white powder removal portion 30 is provided with a vibratory device 23 for imparting vibrations thereto.

According to this embodiment, the ambient gas removed of the white powder by the white powder removal portion 30 is introduced through a filter portion 19 so as to remove fractional white powder residual in the ambient gas.

Subsequently, the ambient gas thus removed of the white powder is introduced into an oxygen eliminator 20 and a dryer device 21 for removing oxygen and moisture contained in the ambient gas before the ambient gas is returned to the first cooling zone 13a described above. This embodiment is arranged such that the ambient gas removed of the white powder and the like is returned to the first cooling zone 13a. However, the place where this ambient gas is returned is not particularly limited and the ambient gas may also be returned to the heating zone 12 or to the second or third cooling zone 13b, 13c.

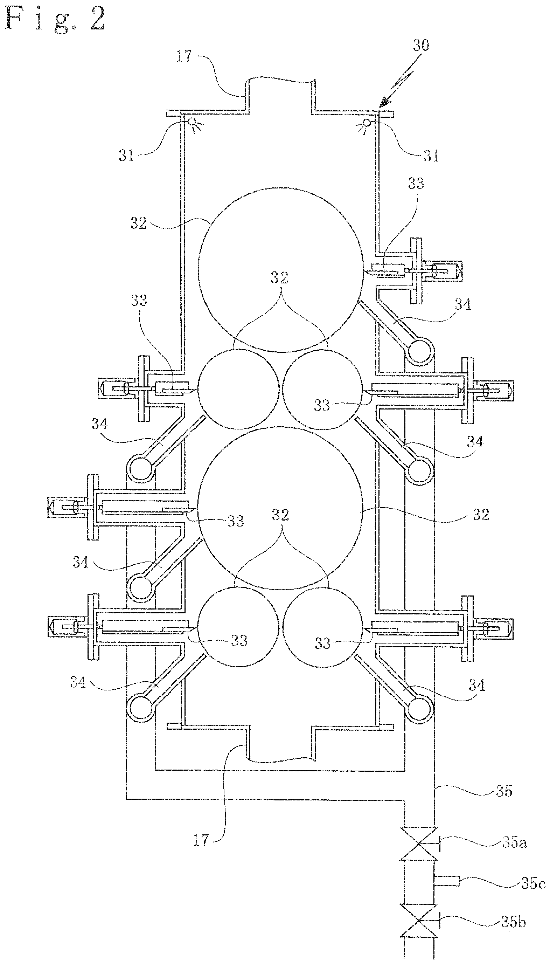

In the continuous annealing furnace 10 of this embodiment, the above-described white powder removal portion 30 has an arrangement to remove the white powder contained in the ambient gas. As shown in Fig.2, a coolant feeding device 31 is provided for injecting a coolant such as liquid nitrogen into the white powder removal portion 30. A plurality of water-cooled rotary cooling rolls 32 shaped like cylinders having large and small diameters are arranged in the white powder removal portion 30 with minor gaps of the order of 10mm, for example, defined therebetween. Removing means comprising a blade 33 is pressed against an outside surface of each of the cooling rolls 32. While the embodiment employs the two types of large and small cooling rolls 32 of the water-cooling type, the size or the number of the cooling rolls 32 provided in the white powder removal portion 30 is not particularly limited.

The ambient gas introduced into the white powder removal portion 30 as maintained at the temperature above the solidification point of the white powder component as described above is cooled with the coolant injected from the coolant feeding device 31 and by the individual cooling rolls 32, whereby the white powder component contained in the ambient gas is condensed and solidified to form the white powder on the outside surfaces of the rotating cooling rolls 32.

The white powder thus formed on the outside surfaces of the rotating cooling rolls 32 is removed from the respective outside surfaces of the cooling rolls 32 by means of the respective blades 33. The white powder removed at this time is in the form of flakes and hence, is easy to handle.

In the case where the plural cooling rolls 32 are arranged with the minor gaps defined therebetween as described above, thermal conductivity is improved because of the increase in the area where the ambient gas is in contact with the cooling rolls 32 and of the increase in speed at which the ambient gas passes through the gaps between the cooling rolls 32. Hence, the ambient gas containing the white powder components is more adequately cooled by the individual cooling rolls 32.

As described above, the white powder component contained in the ambient gas is adequately condensed and solidified to form the white powder on the respective outside surfaces of the cooling rolls 32, while the white powder thus formed on the respective outside surfaces of the cooling rolls 32 is removed by the respective blades 33. As a result, the amount of white powder component contained in the ambient gas introduced to the filter portion 19 is reduced so that the accumulation of the white powder on the filter portion 19 is further reduced.

According to the embodiment, the white powder is removed from the respective outside surfaces of the cooling rolls 32 by means of the respective blades 33 while vibrating the white powder removal portion 30 by means of the vibratory device 23 provided thereat. The removed white powder is recovered by respective recovery portions 34. The white powder thus recovered by the recovery portions 34 is discharged to the outside by means of discharging means.

It is noted here that this embodiment is arranged such that the white powder recovered by the recovery portions 34 is discharged to the outside by means of the discharging means. In this embodiment, a discharge pipe 35 for discharging the white powder recovered by the recovery portions 34 to the outside of the apparatus is provided with a first valve 35a and a second valve 35b at an outlet-side end thereof. The first and second valves are spaced apart by a required distance. Further, the discharge pipe 35 is provided with a nitrogen-gas feeding pipe 35c for feeding a nitrogen gas into its portion between the first valve 35a and the second valve 35b.

When the amount of the white powder introduced from the above recovery portions 34 into the discharge pipe 35 reaches a predetermined value, the first valve 35a is opened to introduce the white powder into the discharge pipe portion 35 between the first valve 35a and the second valve 35b. After the first valve 35a is closed, the second valve 35b is opened while the nitrogen gas is fed from the nitrogen-gas feeding pipe 35c into the discharge pipe portion 35 between the first valve 35a and the second valve 35b. Thus, the white powder introduced into this discharge pipe portion 35 is discharged to the outside and thereafter, the second valve 35b is closed.

If this procedure is taken, the discharge pipe portion 35 between the first valve 35a and the second valve 35b is filled with the nitrogen gas. Subsequently when the first valve 35a is opened to introduce the white powder into the discharge pipe 35, it is ensured that the outside air is positively prevented from invading into the continuous annealing furnace 10 through the white powder removal portion 30.

While this embodiment employs the cylindrical roll as the cooling roll 32, a usable cooling roll 32 is not limited to this.

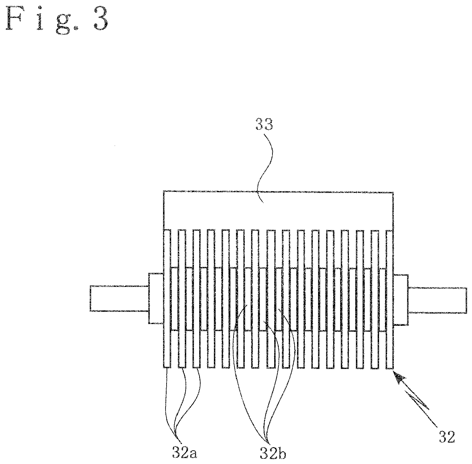

An arrangement as shown in Fig.3, for example, may be made in order that the contact area between the ambient gas containing the white powder component and the cooling roll 32 is increased for allowing the cooling roll 32 to cool the ambient gas efficiently and adequately removing the white powder contained in the ambient gas. That is, an accordion-shaped cooling roll 32 having large diameter portions 32a and small diameter portions 32 32b alternating with each other is employed, while a comb-shaped blade 33 conforming to an outside configuration of the accordion-shaped cooling roll 32 is employed as the removing means for removing the white powder formed on an outside surface of this cooling roll 32.

In the continuous annealing furnace 10 according to the above embodiment, it is also possible to lower the dew point of the ambient gas by introducing a hydrocarbon containing gas into the continuous annealing furnace 10 so that the partial pressure of water vapor may be reduced to prevent the formation of the white powder in the first to third cooling zones 13a to 13c.

### [Reference Characters List]

- 1:: Subject material
- 10:: Continuous annealing furnace
- 11:: Inlet sealing portion
- 12:: Heating zone
- 12a:: Internal pipe
- 12b:: External pipe
- 12c:: Heating means
- 13a-13c:: First to third cooling zones
- 14:: Top roll chamber
- 15:: Chute
- 16:: Outlet sealing portion
- 17:: Guiding duct
- 18:: Blower
- 19:: Filter portion
- 20:: Oxygen eliminator
- 21:: Dryer device
- 22:: Temperature controller
- 23:: Vibratory device
- 30:: White powder removal portion
- 31:: Coolant feeding device
- 32:: Cooling roll
- 32a:: Great diameter portion
- 32b:: Small diameter portion
- 33:: Blade (Removing means)
- 34:: Recovery portion
- 35:: Discharge pipe
- 35a:: First valve
- 35b:: Second valve
- 35c:: Nitrogen-gas feeding pipe

## Claims

1. A continuous annealing furnace which comprises a heating zone (12) for heating a subject material (1) and a cooling zone (13) for cooling the heated subject material and which anneals the subject material in a bright-annealing ambient gas while continuously transporting the subject material from the heating zone to the cooling zone, **characterized in that** a guiding duct is provided for introducing the ambient gas containing a white powder component from the continuous annealing furnace to a white powder removal portion (30) and wherein the white powder removal portion includes a cooling roll (32) for inducing the formation of white powder by cooling the ambient gas and removing means for removing the white powder formed on the cooling roll(32).

2. The continuous annealing furnace according to Claim 1, wherein the ambient gas containing the white powder component and introduced from the continuous annealing furnace to the white powder removal portion (30) has a temperature above a solidification point of the white powder component.

3. The continuous annealing furnace according to Claim 1 or 2, wherein a temperature controller (22) is provided in the guiding duct (17) to control the temperature of the ambient gas introduced into the white powder removal portion.

4. The continuous annealing furnace according to any one of Claims 1 to 3, wherein the white powder removal portion (30)
is provided with the plural cooling rolls and removing means and wherein a gap defined between the cooling rolls for passage of the ambient gas is made small.

5. The continuous annealing furnace according to any one of Claims 1 to 4, wherein a coolant feeding device (31) is provided for feeding a coolant into the white powder removal portion (30).

6. The continuous annealing furnace according to any one of Claims 1 to 5, wherein discharging means (35) is provided for discharging the white powder from the white powder removal portion to the outside, the white powder removed from the cooling roll by means of the removing means.

7. The continuous annealing furnace according to any one of Claims 1 to 6, wherein the ambient gas removed of the white powder is returned to the continuous annealing furnace.

8. The continuous annealing furnace according to any one of Claims 1 to 7, wherein a vibratory device (23) is provided for imparting vibrations to the white powder removal portion.

## Patentansprüche

1. Kontinuierlich arbeitender Glühofen mit einer Heizzone (12) zum Heizen eines Objektmaterials (1) und einer Kühlzone (13) zum Kühlen des aufgeheizten Objektmaterials und der das Objektmaterial in einem hell-glühenden Umgebungsgas tempert während das Objektmaterial kontinuierlich von der Heizzone zu der Kühlzone transportiert wird, **dadurch gekennzeichnet, dass** eine Führungsleitung zum Einbringen des Umgebungsgases, das eine Weißpulverkomponente enthält, von dem kontinuierlichen Glühofen zu einem Weißpulver-Entfernungsbereich (30) vorgesehen ist und wobei der Weißpulver-Entfernungsbereich eine Kühlwalze (32) zur Indizierung der Bildung des Weißpulvers durch Kühlen des Umgebungsgases und eine Entfernungseinrichtung zum Entfernen des Weißpulvers aufweist, das auf der Kühlwalze (32) gebildet wird.

2. Kontinuierlich arbeitender Glühofen nach Anspruch 1, wobei das Umgebungsgas, das die Weißpulverkomponente enthält und von dem kontinuierlichen Glühofen zu dem Weißpulver-Entfernungsbereich (30) eingebracht wird, eine Temperatur oberhalb eines Erstarrungspunktes der Weißpulverkomponente aufweist.

3. Kontinuierlich arbeitender Glühofen nach Anspruch 1 oder 2, wobei eine Temperatursteuerung (22) in der Führungsleitung (17) vorgesehen ist, um die Temperatur des Umgebungsgases, das in den Weißpulver-Entfernungsbereich eingebracht wird, zu steuern.

4. Kontinuierlich arbeitender Glühofen nach einem der Ansprüche 1 bis 3, wobei der Weißpulver-Entfernungsbereich (30) mit den mehreren Kühlwalzen und der Entfernungseinrichtung versehen ist, und wobei ein Spalt, der zwischen den Kühlwalzen für den Durchlass des Umgebungsgases definiert ist, klein gestaltet ist.

5. Kontinuierlich arbeitender Glühofen nach einem der Ansprüche 1 bis 4, wobei eine Kühlmittel-Zufuhrvorrichtung (31) vorgesehen ist, um ein Kühlmittel dem Weißpulver-Entfernungsbereich (30) zuzuführen.

6. Kontinuierlich arbeitender Glühofen nach einem der Ansprüche 1 bis 5, wobei eine Abführeinrichtung (35) zum Abführen des Weißpulvers aus dem Weißpulver-Entfernungsbereich nach außen vorgesehen ist, wobei das Weißpulver von der Kühlwalze mittels der Entfernungseinrichtung entfernt wird.

7. Kontinuierlich arbeitender Glühofen nach einem der Ansprüche 1 bis 6, wobei das Umgebungsgas, aus dem das Weißpulver entfernt ist, in den kontinuierlich arbeitenden Glühofen zurückgeführt wird.

8. Kontinuierlich arbeitender Glühofen nach einem der Ansprüche 1 bis 7, wobei eine Vibrationsvorrichtung (23) vorgesehen ist, um Vibrationen auf den Weißpulver-Entfernungsbereich auszuüben.

## Revendications

1. Four de recuit continu qui comprend une zone de chauffage (12) pour chauffer un matériau sujet (1), et une zone de refroidissement (13) pour refroidir le matériau sujet chauffé, et qui recuit le matériau sujet dans un gaz ambiant de recuit brillant tout en transportant en continu le matériau sujet de la zone de chauffage à la zone de refroidissement,
**caractérisé en ce qu'**un conduit de guidage est prévu pour introduire le gaz ambiant contenant un composant de poudre blanche du four de recuit continu à une partie d'élimination de poudre blanche (30), et la partie d'élimination de poudre blanche comprenant un rouleau de refroidissement (32) pour induire la formation de poudre blanche par refroidissement du gaz ambiant, et des moyens d'élimination pour éliminer la poudre blanche formée sur le rouleau de refroidissement (32).

2. Four de recuit continu selon la revendication 1, dans lequel le gaz ambiant contenant le composant de poudre blanche, et introduit à partir du four de recuit continu vers la partie d'élimination de poudre blanche (30), a une température supérieure à un point de solidification du composant de poudre blanche.

3. Four de recuit continu selon la revendication 1 ou 2, dans lequel un régulateur de température (22) est prévu dans le conduit de guidage (17) pour réguler la température du gaz ambiant introduit dans la partie d'élimination de poudre blanche.

4. Four de recuit continu selon l'une quelconque des revendications 1 à 3, dans lequel la partie d'élimination de poudre blanche (30) est prévue avec la pluralité de rouleaux de refroidissement et des moyens d'élimination, et dans lequel un espace défini entre les rouleaux de refroidissement pour le passage du gaz ambiant est rendu petit.

5. Four de recuit continu selon l'une quelconque des revendications 1 à 4, dans lequel un dispositif d'alimentation en fluide de refroidissement (31) est prévu pour alimenter avec un fluide de refroidissement la partie d'élimination de poudre blanche (30).

6. Four de recuit continu selon l'une quelconque des revendications 1 à 5, dans lequel un moyen de décharge (35) est prévu pour décharger la poudre blanche à partir de la partie d'élimination de poudre blanche vers l'extérieur, la poudre blanche étant éliminée du rouleau de refroidissement à l'aide du moyen d'élimination.

7. Four de recuit continu selon l'une quelconque des revendications 1 à 6, dans lequel le gaz ambiant débarrassé de la poudre blanche est renvoyé au four de recuit continu.

8. Four de recuit continu selon l'une quelconque des revendications 1 à 7, dans lequel un dispositif vibratoire (23) est prévu pour impartir des vibrations à la partie d'élimination de poudre blanche.
